(19) Europäisches Patentamt
European Patent Office
Office européen des brevets

(11) **EP 2 199 882 A1**

(12) **EUROPÄISCHE PATENTANMELDUNG**

(43) Veröffentlichungstag:
**23.06.2010 Patentblatt 2010/25**

(51) Int Cl.:
**G05B 19/4093** *(2006.01)*

(21) Anmeldenummer: **08171818.1**

(22) Anmeldetag: **16.12.2008**

| | |
|---|---|
| (84) Benannte Vertragsstaaten:<br>**AT BE BG CH CY CZ DE DK EE ES FI FR GB GR HR HU IE IS IT LI LT LU LV MC MT NL NO PL PT RO SE SI SK TR**<br>Benannte Erstreckungsstaaten:<br>**AL BA MK RS** | (71) Anmelder: **Siemens Aktiengesellschaft**<br>**80333 München (DE)**<br><br>(72) Erfinder: **Spielmann, Ralf**<br>**74238 Krautheim (DE)** |

(54) **Verfahren und Rechner zur Erzeugung eines Steuerbefehls eines Teileprogramms**

(57) Die Erfindung betrifft ein Verfahren zur Erzeugung eines Steuerbefehls eines Teileprogramms (22), wobei anhand des Teileprogramms (22) von einer Steuereinrichtung (23) einer Werkzeugmaschine (38) die Bewegungen eines Werkzeugs (6) und/oder eines Werkstücks (42) steuerbar sind, wobei das Werkzeug (6) rotationssymmetrisch ist, wobei die Werkzeugmaschine (38) mindestens drei Rundachsen (A,B,C) zur Realisierung von Orientierungen (OR1,OR2) des Werkzeugs (6) im Bezug auf das Werkstück (42) aufweist, wobei eine erste Orientierung (OR1) des Werkzeugs vorgegeben wird, wobei eine zweite Orientierung (OR2) des Werkzeugs (6) vorgegeben wird, wobei ein Optimierungskriterium zur Optimierung der Bewegung der mindestens drei Rundachsen (A,B,C) vorgegeben wird, wobei aus der ersten Orientierung (OR1) und der zweiten Orientierung (OR2) mindestens drei Kombinationen aus möglichen Drehwickeln ($A_W, B_W, C_W$) ermittelt werden um die die drei Rundachsen (A,B,C) jeweils gedreht werden müssen um die Orientierung des Werkzeugs im Bezug auf das Werkstück von der ersten Orientierung (OR1) zur zweiten Orientierung (OR2) zu verändern, wobei anhand des Optimierungskriteriums eine der mindestens drei Kombinationen ausgewählt wird, wobei anhand der ausgewählten Kombination der Steuerbefehl erzeugt wird. Weiterhin betrifft die Erfindung einen Rechner zum Durchführen des Verfahrens. Die Erfindung ermöglicht eine für einen Bearbeitungsvorgang optimierte Bewegung von Achsen einer Werkzeugmaschine, die mindestens drei Rundachsen zur Einstellung von räumlichen Orientierungen eines Werkzeugs aufweist.

FIG 1

EP 2 199 882 A1

**Beschreibung**

Die Erfindung betrifft ein Verfahren zur Erzeugung eines Steuerbefehls eines Teileprogramms. Weiterhin betrifft die Erfindung einen Rechner zur Durchführung des Verfahrens.

Werkzeugmaschinen werden heutzutage mit Hilfe einer Steuereinrichtung, wie z.B. einer CNC-Steuerung, gesteuert. Dabei steuert die Steuereinrichtung die Bewegungen von Maschinenelementen der Werkzeugmaschine, wie z.B. einer Werkzeughaltevorrichtung, in der ein Werkzeug eingespannt ist, anhand eines Teileprogramms. Das Teileprogramm besteht dabei aus Steuerbefehlen, die von der Steuereinrichtung eingelesen und interpretiert werden. Entsprechend den Steuerbefehlen steuert die Steuereinrichtung die Bewegung des Werkzeugs und/oder die Bewegung des Werkstücks und damit die Relativbewegung zwischen Werkzeug und Werkstück der Werkzeugmaschine.

Zur Erstellung eines Teileprogramms werden dabei von einem CAM-System (Computer Aided Manufacturing), vorzugsweise in einem standardisierten Datenformat, Bewegungsinformationen über durchzuführende Bewegungen des Werkzeugs erzeugt und von einem nachgeschalteten Postprozessor eingelesen. Der Postprozessor erzeugt anhand der vom CAM-System erzeugten Bewegungsinformationen und Maschinendaten der Werkzeugmaschine, ein für die jeweilige konkrete Werkzeugmaschine auf denen der Bearbeitungsvorgang stattfinden soll angepasstes Teileprogramm in Form von auf die konkrete Steuereinrichtung der Werkzeugmaschine angepassten Steuerbefehlen. Solchermaßen werden vom Postprozessor die vom CAM-System vorzugsweise in einem standardisierten Datenformat erzeugten Bewegungsinformationen in Steuerbefehle, die von der Steuereinrichtung eingelesen werden können und auf die jeweilige Steuereinrichtung angepasst sind, umgesetzt.

Der Postprozessor berücksichtigt dabei die konkreten maschinenspezifischen kinematischen Gegebenheiten der Werkzeugmaschine, wie z.B. Geometrie, maximale Verfahrbereiche der Antriebsachsen und Maximalgeschwindigkeiten des Maschinenelements. Diese Daten liegen in Form von Maschinendaten vor.

Die vom CAM-System erzeugten Bewegungsinformationen bestehen dabei in der Regel aus sogenannten GOTO-Anweisungen, die Informationen über durchzuführende Bewegungen des Werkzeugs enthalten. Die Bewegungsinformationen bestehen dabei einerseits aus den vom Werkzeug anzufahrenden Positionen und andererseits aus den räumlichen Orientierungen des Werkzeugs, die das Werkzeug an den Positionen einnehmen soll.

Bei Werkzeugmaschinen, die drei Rundachsen zur Einstellung von räumlichen Orientierungen des Werkzeugs aufweisen, ist es insbesondere im Falle von rotationssymmetrischen Werkzeugen allgemein nicht möglich, wie bei Werkzeugmaschinen, die nur Rundachsen aufweisen, eine eindeutige Lösung anzugeben, die die Drehwinkel bestimmt, um die die Rundachsen gedreht werden müssen, um die gewünschte Orientierung des Werkzeugs im Bezug auf das Werkstück zu erzielen. Die Werkzeugmaschine ist fachspezifisch ausgedrückt bezüglich der einstellbaren Orientierung des Werkzeugs kinematisch überbestimmt, da jede gewünschte Orientierung mittels der Verwendung von nur zwei Rundachsen anstatt von drei Rundachsen eingestellt werden kann. Da sich die einzelnen Rundachsen, z.B. aber sich in ihrer Dynamik, wie z.B. in ihrer Geschwindigkeit und ihrer Beschleunigung, mit der sie bewegt werden können, unterscheiden, macht es durchaus Sinn, mehr Rundachsen zur Verfügung zu stellen, als unbedingt notwendig sind, um die Orientierung des Werkzeugs im Bezug auf das Werkstück einzustellen.

Es ist Aufgabe der Erfindung, eine für einen Bearbeitungsvorgang optimierte Bewegung von Achsen einer Werkzeugmaschine, die mindestens drei Rundachsen zur Realisierung von räumlichen Orientierungen eines Werkzeugs aufweist, zu ermöglichen.

Diese Aufgabe wird gelöst durch ein Verfahren zur Erzeugung eines Steuerbefehls eines Teileprogramms, wobei anhand des Teileprogramms von einer Steuereinrichtung einer Werkzeugmaschine die Bewegungen eines Werkzeugs und/oder eines Werkstücks steuerbar sind, wobei das Werkzeug rotationssymmetrisch ist, wobei die Werkzeugmaschine mindestens drei Rundachsen zur Realisierung von Orientierungen des Werkzeugs im Bezug auf das Werkstück aufweist, wobei eine erste Orientierung des Werkzeugs vorgegeben wird, wobei eine zweite Orientierung des Werkzeugs vorgegeben wird, wobei ein Optimierungskriterium zur Optimierung der Bewegung der mindestens drei Rundachsen vorgegeben wird, wobei aus der ersten Orientierung und der zweiten Orientierung mindestens drei Kombinationen aus möglichen Drehwickeln ermittelt werden um die die drei Rundachsen jeweils gedreht werden müssen um die Orientierung des Werkzeugs im Bezug auf das Werkstück von der ersten Orientierung zur zweiten Orientierung zu verändern, wobei anhand des Optimierungskriteriums eine der mindestens drei Kombinationen ausgewählt wird, wobei anhand der ausgewählten Kombination der Steuerbefehl erzeugt wird.

Weiterhin wird diese Aufgabe gelöst durch einen Rechner, der zum Durchführen des erfindungsgemäßen Verfahrens ausgebildet ist und einen Massenspeicher auf dem ein Computerprogramm gespeichert ist, aufweist, wobei bei Aufruf des Computerprogramms von dem Rechner das erfindungsgemäße Verfahren ausführbar ist.

Vorteilhafte Ausführungen des Verfahrens ergeben sich analog zu vorteilhaften Ausbildungen des Rechners und umgekehrt.

Vorteilhafte Ausbildungen der Erfindung ergeben sich aus den abhängigen Patentansprüchen.

Es erweist sich als vorteilhaft, wenn das Optimierungskriterium darin besteht, dass die Drehwinkel um die die mindestens drei Rundachsen gedreht werden müssen möglichst kein sind, da dann die Rundachsen am wenigsten bewegt werden müssen.

Ferner erweist es sich als vorteilhaft, wenn das Optimierungskriterium darin besteht, dass die Veränderung von der ersten Orientierung zur zweiten Orientierung möglichst schnell auf der Werkzeugmaschine erfolgt, da dann die gewünschte Orientierung des Werkzeugs sehr schnell erreicht werden kann.

Ferner erweist es sich als vorteilhaft, wenn das Optimierungskriterium darin besteht, dass die translatorischen Achsen der Werkzeugmaschine möglichst wenig bewegt werden, da dann der Verschleiß der translatorischen Achsen der Werkzeugmaschine gering ist.

Ein Ausführungsbeispiel der Erfindung ist in der Zeichnung dargestellt und wird im Folgenden näher erläutert. Dabei zeigen:

FIG 1    eine sechsachsige Werkzeugmaschine,
FIG 2    der Werkzeugkopf der Werkzeugmaschine in einer vergrößerten Darstellung,
FIG 3    Ein Gesamtprozess zur Erstellung eines Teileprogramms und
FIG 4    eine Bewegungsbahn des Werkzeugs mit Orientierungen des Werkzeugs.

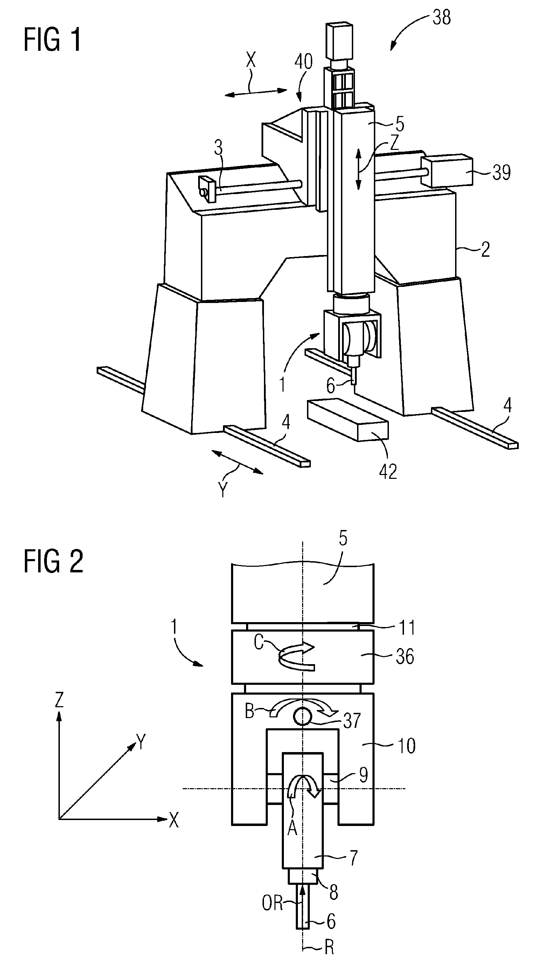

In FIG 1 ist in Form einer schematisierten Darstellung eine Werkzeugmaschine 38 dargestellt. Die Werkzeugmaschine 38 weist dabei drei translatorische Achsen auf, die eine translatorische Bewegung eines Werkzeugs 6 in X-Richtung, Y-Richtung und Z-Richtung ermöglichen. Die Werkzeugmaschine 38 weist somit eine translatorische X-Achse, eine translatorische Y-Achse und eine translatorische Z-Achse auf. Zur Realisierung der Bewegung des Werkzeugs 6 in X-Richtung weist die Werkzeugmaschine 38 einen Motor 39 auf, der über eine Gewindespindel 3 über eine Befestigungsvorrichtung 40 einen Linearmotor 5 in X-Richtung bewegt. Zur Realisierung der Bewegung des Werkzeugs 6 in Z-Richtung weist die Werkzeugmaschine 38 den Linearmotor 5 auf, der das Werkzeug 6 translatorisch in Z-Richtung, d.h. in der Darstellung gemäß FIG 1 nach oben oder nach unten, bewegt. Zur Realisierung der translatorischen Bewegung in Y-Richtung weist die Werkzeugmaschine 38 ein, mit der Übersichtlichkeit halber nicht mehr dargestellten Motoren versehenes Gestell 2, das über Führungen 4 in Y-Richtung translatorisch mittels der Motoren bewegt werden kann, auf.

Weiterhin weist die Werkzeugmaschine 38, zur Einstellung von räumlichen Orientierungen des Werkzeugs 6 im Bezug zum Werkstück 42, einen Werkzeugkopf 1 auf, der in FIG 2 vergrößert dargestellt ist. Gleiche Elemente sind in FIG 2 mit den gleichen Bezugszeichen versehen wie in FIG 1. Der Werkzeugkopf 1 weist drei senkrecht zueinander stehende Rundachsen A, B und C zur Einstellung von räumlichen Orientierungen des Werkzeugs 6 im Bezug auf ein Werkstück 42 auf. Die Orientierung OR des Werkzeugs 6, das rotationssymmetrisch ist, ist dabei in Form eines Orientierungsvektors OR, der von der Werkzeugspitze längs der Rotationsachse R des Werkzeugs in Richtung des Werkzeugkopfs 1 zeigt, dargestellt. Mittels der Rundachse C kann das Werkzeug um die Z-Achse (siehe dargestelltes X-, Y-, Z-Koordinatensystem) gedreht werden. Die Z-Achse ist dabei über einen Motor 36, der über eine Welle 11 ein U-förmiges Element 10 drehend bewegt, realisiert. Weiterhin kann das Werkzeug 6 über die Rundachse B, welche eine Drehung des Werkzeugs 6 um die Y-Achse erlaubt, gedreht werden. Die Rundachse B ist dabei über das U-förmige Element 10, das einen in FIG 2 der Übersichtlichkeit halber nicht dargestellten Motors aufweist, welcher eine Drehbewegung um eine Welle 37 ermöglicht, realisiert. Die Rundachse B liegt dabei im Rahmen des Ausführungsbeispiels in Form einer Schwenkachse vor, da das U-förmige Element nicht vollständig über einen Drehwinkel von 360° gedreht werden kann. Die Rundachse A, welche eine Drehung des Werkzeugs 6 um die X-Achse ermöglicht, ist dabei über eine Welle 9, an die ein Motor 7 befestigt ist, und einen in FIG 2 der Übersichtlichkeit halber nicht dargestellten im U-förmigen Element 10 integrierten Motor, der die Welle 9 drehend antreibt, realisiert. Die Rundachse A liegt dabei im Rahmen des Ausführungsbeispiels ebenfalls in Form einer Schwenkachse vor, d.h. sie kann nicht vollständig über einen Drehwinkel von 360° gedreht werden. Der Motor 7 treibt rotatorisch eine Werkzeughaltevorrichtung 8 an, in die das Werkzeug 6 eingespannt ist. Das Werkzeug 6 ist im Rahmen des Ausführungsbeispiels als Fräsers ausgebildet. Fachspezifisch wird der Motor 7 auch als Spindelmotor bezeichnet.

Solchermaßen weist die Werkzeugmaschine 38 eine translatorische X-Achse, eine translatorische Y-Achse und eine translatorische Z-Achse und die drei Rundachsen A, B und C auf. Mit Hilfe der drei Rundachsen A, B und C lässt sich nun jede beliebige räumliche Orientierung OR des Werkzeugs 6 im Bezug auf das Werkstück 42 realisieren. Die Rundachsen A, B und C müssen nur entsprechend gedreht werden, um das Werkzeug 6 entsprechend auszurichten, um die gewünschte räumliche Orientierung OR des Werkzeugs 6 in Bezug auf das Werkstück 42 zu realisieren.

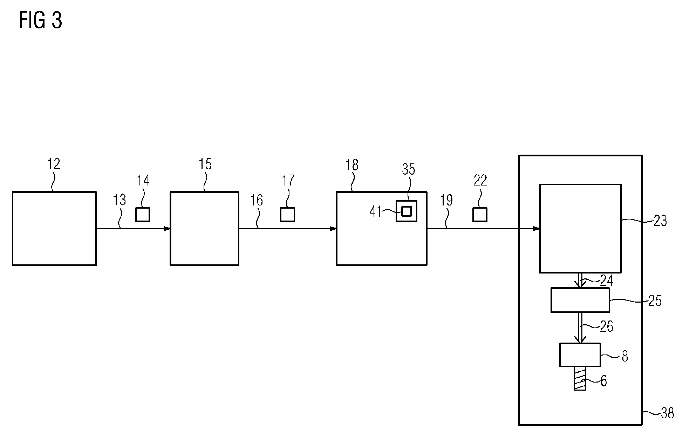

In FIG 3 ist in Form einer schematisierten blockförmigen Darstellung der Gesamtprozess, der bei der Erstellung eines Teileprogramms durchgeführt wird, dargestellt. Auf einem CAD-System 12 (Computer Aided Design) wird ein zu fertigendes Werkstück konstruiert und dargestellt. Das Werkstück weist dabei eine Geometrie auf, die mittels Geometriedaten 14 beschrieben wird, wobei die Geometriedaten des Werkstücks in der Regel in Form einer Punktewolke, die die äußere Kontur des Werkstücks wiedergibt, vorliegen. Die Geometriedaten 14 des Werkstücks werden an ein CAM-System 3 (Computer Aided Manufacturing) vom CAD-System 12 übermittelt, was durch einen Pfeil 2 dargestellt ist.

Das CAM-System 3 ermittelt aus den Geometriedaten 14 des Werkstücks und den Geometriedaten eines Rohteils aus denen das Werkstück, z.B. im Falle einer Fräsbearbeitung, herausgefräst werden soll, die zur Fräsbearbeitung des Rohlings notwendigen Bewegungen des Werkzeugs 6.

Die Bewegungen des Werkzeugs 6 werden dabei von einer Steuereinrichtung 23, die im Rahmen des Ausführungsbeispiels in Form einer CNC-Steuerung vorliegt, bei der in FIG 1 im Rahmen des Ausführungsbeispiels dargestellten Werkzeugmaschine 38 über die Bewegung der Werkzeughaltevorrichtung 8, gesteuert. Die Steuereinrichtung 23 erzeugt hierzu in einem äquidistanten Zeittakt Sollwerte als Regelsollwerte für ein Antriebssystem 25, das die Werkzeughaltevorrichtung 8 bewegt, was durch einen Pfeil 26 dargestellt ist. Die Sollwerte werden von der Steuereinrichtung 23 an das Antriebssystem 25 übermittelt, was durch einen Pfeil 24 in der FIG 3 dargestellt ist. Das Antriebssystem 25 beinhaltet dabei im Wesentlichen die zum Bewegen der Werkzeughaltevorrichtung 8 über die X-Achse, Y-Achse, Z-Achse, A-Achse, B-Achse und C-Achse notwendigen Regeleinrichtungen, Stromrichter, Motoren und Getriebe.

Die Steuereinrichtung 23 steuert dabei die Bewegung des Werkzeugs 6 mittels eines Teileprogramms 22, das Steuerbefehle aufweist, anhand derer von der Steuereinrichtung 23 die Werkzeugmaschine 38 gesteuert wird. Das CAM-System 15 erzeugt ausgangsseitig aus den vom CAD-System 12 übermittelten Geometriedaten des Werkstücks und den Geometriedaten des Rohteils Bewegungsinformationen 17 über die zur Fertigung des Werkstücks aus dem Rohteil durchzuführenden Bewegungen des Werkzeugs 6. Die Bewegungsinformation 17 über die durchzuführenden Bewegungen des Werkzeugs 6 werden dabei vom CAM-System 15 in der Regel in einem standardisierten Datenformat, wie z.B. CLDATA oder APT erzeugt. Die vom CAM-System erzeugten Bewegungsinformationen bestehen dabei in der Regel aus sogenannten GOTO-Anweisungen, die Informationen über durchzuführende Bewegungen des Werkzeugs 6 enthalten. Die Bewegungsinformationen bestehen dabei einerseits aus den vom Werkzeug anzufahrenden Positionen und andererseits aus den räumlichen Orientierungen des Werkzeugs, die das Werkzeug an den Positionen einnehmen soll. Die Position kann sich dabei z.B. auf den sogenannten Tool Center Point des Werkzeugs 6 beziehen.

Die Bewegungsinformationen über die durchzuführenden Bewegungen liegen dabei in der Regel im Wesentlichen in Form von so genannten standardisierten GOTO-Anweisungen vor.

Über die GOTO-Anweisungen werden Positionen in einem dreidimensionalen Raum definiert, die nacheinander vom Werkzeug angefahren werden müssen, um das gewünschte Werkstück aus dem Rohteil zu fertigen.

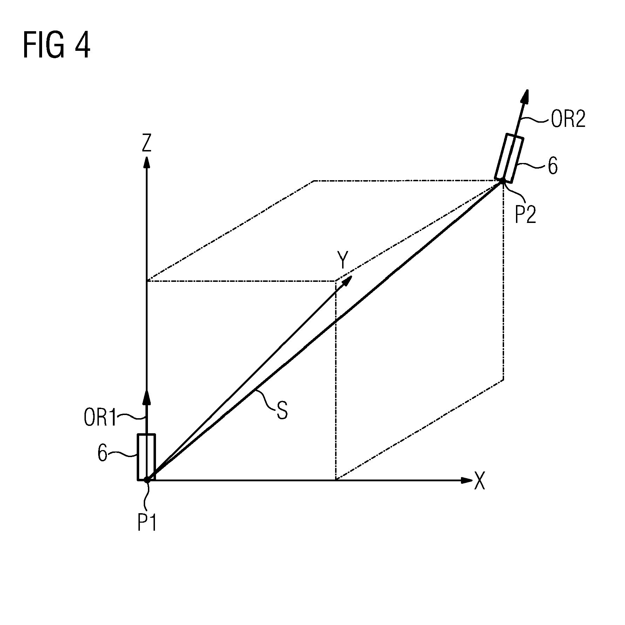

In FIG 4 ist hierzu die Bewegungsbahn S des Werkzeugs 6, das im Rahmen des Ausführungsbeispiels von der Position P1 mit den Koordinaten X=0, Y=0 und Z=0 auf die Position P2 mit den Koordinaten X=100, Y=100 und Z=100 verfahren werden soll, eingezeichnet. Neben den Positionen des Werkzeugs 6 werden vom CAM-System 15 aber auch die zu jeder Position zugehörige Orientierung des Werkzeugs in Form eines Orientierungsvektors ausgegeben. An der Position P1 weist dabei das Werkzeug 6 eine erste Orientierung OR1 auf und an der Position P2 weist das Werkzeug 6 eine zweite Orientierung OR2 auf, welche sich von der ersten Orientierung OR1 unterscheidet.

Die Bewegungsinformationen 17 werden nun an einen Rechner 18 übermittelt (siehe Pfeil 16 in FIG 3) auf dem ein Computerprogramm 41 zur Erstellung des Teileprogramms abläuft, wobei der Rechner 18 in Verbindung mit dem auf ihm ablaufenden Computerprogramm 41 fachspezifisch auch als Postprozessor bezeichnet wird. Das Computerprogramm 41 ist auf einem Massenspeicher, z.B. einer Festplatte, gespeichert und kann von einem Benutzer zur Ausführung des Computerprogramms aufgerufen werden.

Ein handelsüblicher Postprozessor erzeugt bei einer Werkzeugmaschine, bei der die Orientierung des Werkzeugs im Bezug auf das Werkstück mittels nur zweier Rundachsen eingestellt werden kann und somit kinematisch nicht überbestimmt ist, aus den vom CAM-System erzeugten Bewegungsinformationen 17 und von Maschinendaten der Werkzeugmaschine, die z.B. Information über die Kinematik der Werkzeugmaschine, das Antriebssystem der Werkzeugmaschine, zulässige Fahrbereiche des Werkzeugs und z.B. zulässige Maximalgeschwindigkeiten der Achsen der Werkzeugmaschine enthalten, ein Teileprogramm 22, das nachfolgend an die Steuereinrichtung 23 zur Steuerung der Bewegung des Werkzeugs übermittelt wird, was durch einen Pfeil 19 in der FIG 3 dargestellt ist. Das Teileprogramm 22 besteht dabei aus einer Abfolge von Steuerbefehlen.

Wenn nur zwei Rundachsen zur Verfügung stehen, gibt es im Falle eines rotationssymmetrischen Werkzeugs immer eine eindeutige Lösung, wie die Rundachsen zu drehen sind, damit sich die gewünschte Orientierung des Werkzeugs im Bezug zum Werkstück einstellt. Bei einer Werkzeugmaschine, bei der die Orientierung des Werkzeugs mittels dreier Rundachsen, wie in FIG 1 und 2 beschrieben, eingestellt werden kann, tritt aber das Problem der kinematischen Überbestimmtheit auf. Zur Realisierung einer Orientierung des Werkzeugs im Bezug auf das Werkstück gibt es bei einer solchen Werkzeugmaschine immer drei Kombinationen, wie die drei Rundachsen A, B und C jeweils gedreht werden können, um die gewünschte Orientierung des Werkzeugs zu erzielen. Entweder durch Drehung der C-Achse und der A-Achse oder durch Drehung der C-Achse und der B-Achse oder durch Drehung der A-Achse und der B-Achse um jeweils einen bestimmten Drehwinkel. Technologisch sinnvoll zur Erzielung eines optimierten Bewegungsablaufs ist aber im Allgemeinen nur eine der drei möglichen Kombinationen.

Hier setzt nun die Erfindung an. In FIG 4 weist die erste Orientierung OR1 an der Position P1 die Vektorwerte $X_W=0$, $Y_W=0$ und $Z_W=1$ auf. Der Index W zeigt auf, dass es sich um die Vektorwerte des Orientierungsvektors OR des Werkzeugs handelt. Die Position P1 weist dabei die Werte X=0, Y=0 und Z=0 auf. Die entsprechende vom CAM-System 15 erzeugte GOTO-Anweisung lautet:

```
GOTO X=0  Y=0  Z=0  Xw=0  Yw=0  Zw=1
```

Um nun, wie in FIG 4 gezeigt, das Werkzeug 6 von der Position P1 zur Position P2 zu verfahren und entsprechend während des Verfahrens des Werkzeugs die Orientierung des Werkzeugs von der ersten Orientierung OR1 zur zweiten Orientierung OR2 zu verändern, lautet die entsprechend nächste vom CAM-System 15 erzeugte GOTO-Anweisung:

```
GOTO X=100  Y=100  Z=100  Xw=0,06162841  Yw=-0,06162841
Zw=0,996194698
```

Nach Ausführung dieses GOTO-Befehls befindet sich das Werkzeug an der Position X=100, Y=100 und Z=100 und hat die zweite Orientierung OR2 mit den Vektorwerten $X_w$=0,06162841, $Y_w$=-0,061628416 und $Z_w$=0,996194698. Um die zweite Orientierung OR2 des Werkzeugs mit den Vektorwerten $X_w$=0,061628416, $Y_w$=-0,061628416 und $Z_w$=0,996194698 einzustellen, werden erfindungsgemäß alle drei unten stehenden Kombinationen aus möglichen Drehwinkeln ermittelt, um die die drei Rundachsen A, B und C jeweils gedreht werden müssen, um die Orientierung des Werkzeugs von der ersten Orientierung OR1 zur zweiten Orientierung OR2 zu verändern. Die erste Orientierung OR1 und zweite Orientierung OR2 werden dabei im Rahmen des Ausführungsbeispiels vom CAM-System 15 vorgegeben.

Wenn die beiden Rundachsen C und A das Werkzeug drehen um die Orientierung des Werkzeugs von der ersten Orientierung OR1 zur zweiten Orientierung OR2 zu verändern gilt für die hierfür notwendigen Drehwinkel $C_w$ und $A_w$:

$$C_W = -a\tan 2\left(\frac{Xw}{Yw}\right) \qquad A_W = a\cos(Zw)$$

Als erste mögliche Kombination ergibt sich somit für die C-Achse ein Drehwinkel $C_w$=45°, für die A-Achse ein Drehwinkel $A_w$=5° und für die B-Achse ein Drehwinkel $B_w$=0°.

Wenn die beiden die Rundachsen C und B das Werkzeug drehen um die Orientierung des Werkzeugs von der ersten Orientierung OR1 zur zweiten Orientierung OR2 zu verändern gilt für die hierfür notwendigen Drehwinkel $C_w$ und $B_w$:

$$C_W = a\tan 2\left(\frac{Yw}{Xw}\right) \qquad B_W = a\cos(Zw)$$

Als zweite mögliche Kombination ergibt sich somit für die C-Achse ein Drehwinkel $C_w$=-45°, für die A-Achse ein Drehwinkel $A_w$=0° und für die B-Achse ein Drehwinkel $B_w$=5°.

Wenn die beiden die Rundachsen A und B das Werkzeug drehen um die Orientierung des Werkzeugs von der ersten Orientierung OR1 zur zweiten Orientierung OR2 zu verändern gilt für die hierfür notwendigen Drehwinkel $A_w$ und $B_w$:

$$B_W = a\tan 2\left(\frac{Xw}{Zw}\right) \qquad A_W = -a\sin(Yw)$$

Als dritte mögliche Kombination ergibt sich somit für die C-Achse ein Drehwinkel $C_w$=0°, für die A-Achse ein Drehwinkel $A_w$=3,533° und für die B-Achse ein Drehwinkel $B_w$=3,540°.

Die mathematischen Funktionen atan2, asin und acos sind dem Fachmann allgemein bekannt.

Erfindungsgemäß wird nun anhand eines vorgegebenen Optimierungskriteriums zur Optimierung der Bewegung der drei Rundachsen eine der drei Kombinationen ausgewählt und anhand der ausgewählten Kombination ein Steuerbefehl des Teileprogramms erzeugt. Wird nun z.B. als Optimierungskriterium vorgegeben, dass die Drehwinkel $C_w$, $A_w$ und $B_w$, um die die drei Rundachsen C, A und B gedreht werden müssen, möglichst klein sind, dann wird die dritte Kombination als Lösung ausgewählt, weil bei ihr die Rundachsen A, B und C am wenigsten gedreht werden müssen und somit die Drehwinkel kleinstmöglich sind um die Orientierung des Werkzeugs von der ersten Orientierung OR1 zur zweiten Orientierung OR2 zu verändern.

Entsprechend der als Lösung ausgewählten Kombination wird dann der zur Realisierung der Bewegung des Werkzeugs entsprechende Steuerbefehl erzeugt. Im Rahmen des Ausführungsbeispiels lautet dabei der Steuerbefehl zur Realisierung der Bewegung des Werkzeugs von der Position P1 zur Position P2 mit der Veränderung der Orientierung des Werkzeugs im Bezug auf das Werkstück von der ersten Orientierung OR1 zur zweiten Orientierung OR2 im Falle z.B. einer SINUMERIK Steuerung der Fa. Siemens:

```
G01 X=100 Y=100 Z=100 C=0 B=3,540 A=3,533
```

Entsprechend werden nun nacheinander die Steuerbefehle für die vom Werkzeug durchzuführenden Bewegungen erzeugt und somit das Teileprogramm erzeugt.

Das Optimierungskriterium kann aber auch darin bestehen, dass die Veränderung von der ersten Orientierung zur zweiten Orientierung möglichst schnell auf der Werkzeugmaschine erfolgen soll. Wenn z.B. die C-Achse und die A-Achse eine besonders hohe Dynamik aufweisen, d.h. z.B. besonders stark beschleunigt werden können, während z.B. die B-Achse eine sehr niedrige Dynamik aufweist, kann z.B. die erste Kombination als Lösung hinsichtlich dieses Optimierungskriteriums ausgewählt werden. Der entsprechend erzeugte Steuerbefehl, welcher vom Postprozessor erzeugt wird, lautet im Rahmen des Ausführungsbeispiels dann:

```
G01 X=100 Y=100 Z=100 C=45 B=0 A=5
```

Häufig ist z.B. auch erwünscht, dass sich bei der Veränderung der Orientierung des Werkzeugs im Bezug auf das Werkstück das Werkzeug und/oder das Werkstück derart bewegt wird, dass die Bewegung um die Spitze des Werkzeugs herum erfolgt. Um dieses zu realisieren, müssen zusätzlich auch die translatorische X-Achsen, Y-Achse , Z-Achse der Werkzeugmaschine neben den Rundachsen A, B, und C der Werkzeugmaschine bewegt werden. Das Optimierungskriterium kann dann auch komplexer aufgebaut sein. So kann z.B. als Optimierungskriterium zusätzlich oder alternativ zu den schon oben genannten Optimierungskriterien z.B. zur Realisierung einer solchen komplexen Bewegung vorgegeben werden, dass die zur Veränderung der Orientierung notwendige Bewegung des Werkzeugs und/oder des Werkstücks derart erfolgen soll, dass die translatorischen Achsen möglichst wenig bewegen müssen oder aber wenn z.B. die Veränderung von der ersten Orientierung zur zweiten Orientierung möglichst schnell auf der Werkzeugmaschine erfolgen soll, je nach dem, welche Achsen eine höhere Dynamik aufweisen, zur Realisierung der Bewegung eher die Rundachsen eingesetzt werden sollen, als die translatorischen Achsen oder umgekehrt.

Entsprechend können dabei auch zusätzlich Restriktionen bei der Optimierung vorgegeben werden, wie z.B. Bewegungsbereichseinschränkungen der Rundachsen und der translatorischen Achsen. So kann z.B. der mögliche Schwenkbereich der Achse im Falle einer Ausbildung der Rundachse als Schwenkachse vorgegeben werden.

Es sei an dieser Stelle angemerkt, dass selbstverständlich die Erfindung auch bei einer Werkzeugmaschine die mehr als drei Rundachsen zur Realisierung von räumlichen Orientierungen des Werkzeugs aufweist, verwendbar ist.

Es weiterhin sei an dieser Stelle angemerkt, dass die Rundachsen auch nicht unbedingt senkrecht zueinander stehen müssen.

Weiterhin sei an dieser Stelle angemerkt, dass nicht unbedingt wie im Ausführungsbeispiel die Werkzeugmaschine so ausgebildet sein muss, dass ihre drei Rundachsen alle das Werkzeug bewegen um eine Orientierung des Werkzeugs im Bezug auf das Werkstück zu realisieren, sondern dass die Rundachsen auch derart realisiert sein können, dass mittels der Rundachsen nicht oder nicht nur das Werkzeug bewegt wird sondern auch das Werkstück oder nur das Werkstück bewegt wird. So kann z.B. die Werkzeugmaschine, zur Realisierung einer Orientierung des Werkzeugs im Bezug auf das Werkstück, zwei Rundachsen aufweisen mit das Werkzeug bewegt werden kann und eine Rundachse aufweisen mittels der das Werkstück bewegt werden kann.

**Patentansprüche**

1. Verfahren zur Erzeugung eines Steuerbefehls eines Teileprogramms (22), wobei anhand des Teileprogramms (22) von einer Steuereinrichtung (23) einer Werkzeugmaschine (38) die Bewegungen eines Werkzeugs (6) und/oder eines Werkstücks (42) steuerbar sind, wobei das Werkzeug (6) rotationssymmetrisch ist, wobei die Werkzeugmaschine (38) mindestens drei Rundachsen (A,B,C) zur Realisierung von Orientierungen (OR1,OR2) des Werkzeugs (6) im Bezug auf das Werkstück (41) aufweist, wobei eine erste Orientierung (OR1) des Werkzeugs vorgegeben wird, wobei eine zweite Orientierung (OR2) des Werkzeugs (6) vorgegeben wird, wobei ein Optimierungskriterium zur Optimierung der Bewegung der mindestens drei Rundachsen (A,B,C) vorgegeben wird, wobei aus der ersten Orientierung (OR1) und der zweiten Orientierung (OR2) mindestens drei Kombinationen aus möglichen Drehwickeln $(A_w, B_w, C_w)$ ermittelt werden um die die drei Rundachsen (A,B,C) jeweils gedreht werden müssen um die Orientierung des Werkzeugs im Bezug auf das Werkstück von der ersten Orientierung (OR1) zur zweiten Orientierung (OR2) zu verändern, wobei anhand des Optimierungskriteriums eine der mindestens drei Kombinationen ausgewählt wird, wobei anhand der ausgewählten Kombination der Steuerbefehl erzeugt wird.

2. Verfahren nach Anspruch 1, **dadurch gekennzeichnet, dass** das Optimierungskriterium darin besteht, dass die Drehwinkel $(A_w, B_w, C_w)$ um die die mindestens drei Rundachsen (A,B,C) gedreht werden müssen möglichst kein sind.

3. Verfahren nach Anspruch 1, **dadurch gekennzeichnet, dass** das Optimierungskriterium darin besteht, dass die Veränderung von der ersten Orientierung (OR1) zur zweiten Orientierung (OR2) möglichst schnell auf der Werkzeugmaschine (6) erfolgt.

4. Verfahren nach einem der vorhergehenden Ansprüche, **dadurch gekennzeichnet, dass** das Optimierungskriterium darin besteht, dass die translatorischen Achsen der Werkzeugmaschine (6) möglichst wenig bewegt werden.

5. Rechner zum Durchführen eines Verfahrens nach einem der Ansprüche 1 bis 4, mit einem Massenspeicher (35) auf dem ein Computerprogramm (41) gespeichert ist, wobei bei Aufruf des Computerprogramms (41) von dem Rechner (18) ein Verfahren nach einem der Ansprüche 1 bis 4 ausführbar ist.

FIG 1

FIG 2

FIG 3

FIG 4

| | | Europäisches Patentamt<br>European Patent Office<br>Office européen des brevets | **EUROPÄISCHER RECHERCHENBERICHT** | **Nummer der Anmeldung**<br>EP 08 17 1818 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 00/28393 A (IMCS INC [US])<br>18. Mai 2000 (2000-05-18)<br>* Seite 1, Zeilen 6-12; Abbildungen 1c,1d,5 *<br>* Seite 8, Zeile 3 - Zeile 4 *<br>* Seite 10, Zeile 5 - Zeile 7 *<br>----- | 1-5 | INV.<br>G05B19/4093 |
| X | WO 91/04521 A (AITEC OY [FI])<br>4. April 1991 (1991-04-04)<br>* Seite 1, Zeile 1 - Zeile 14; Abbildung 1 *<br>* Seite 2, Zeile 22 - Zeile 27 *<br>----- | 1-5 | |
| A | WO 2006/134036 A (SIEMENS AG [DE]; BIRZER JOHANNES [DE]; HAMANN JENS [DE]; KRAM RAIMUND) 21. Dezember 2006 (2006-12-21)<br>* Zusammenfassung *<br>* Seite 4, Zeile 9 - Zeile 19 *<br>* Seite 6, Zeile 23 - Seite 7, Zeile 8 *<br>----- | 1-5 | |
| A | WU P-H ET AL: "Optimized tool path generation based on dynamic programming for five-axis flank milling of rule surface"<br>INTERNATIONAL JOURNAL OF MACHINE TOOLS AND MANUFACTURE, ELSEVIER, US,<br>Bd. 48, Nr. 11,<br>1. September 2008 (2008-09-01), Seiten 1224-1233, XP022703846<br>ISSN: 0890-6955 [gefunden am 2008-03-27]<br>* Zusammenfassung *<br>----- | 1-5 | **RECHERCHIERTE SACHGEBIETE (IPC)**<br>G05B |

-/--

Der vorliegende Recherchenbericht wurde für alle Patentansprüche erstellt

| Recherchenort | Abschlußdatum der Recherche | Prüfer |
|---|---|---|
| München | 18. Mai 2009 | Rakoczy, Tobias |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04C03)

| Europäisches Patentamt European Patent Office Office européen des brevets | **EUROPÄISCHER RECHERCHENBERICHT** | **Nummer der Anmeldung** EP 08 17 1818 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | SHIBATA M ET AL: "Time-optimal trajectory planning for robot manipulators based on the distortive configuration space method" INDUSTRIAL ELECTRONICS, CONTROL AND INSTRUMENTATION, 1994. IECON '94., 20TH INTERNATIONAL CONFERENCE ON BOLOGNA, ITALY 5-9 SEPT. 1994, NEW YORK, NY, USA,IEEE, Bd. 2, 5. September 1994 (1994-09-05), Seiten 1052-1057, XP010137473 ISBN: 978-0-7803-1328-6 * Zusammenfassung * ----- | 1-5 | |
| | | | **RECHERCHIERTE SACHGEBIETE (IPC)** |

Der vorliegende Recherchenbericht wurde für alle Patentansprüche erstellt

| Recherchenort | Abschlußdatum der Recherche | Prüfer |
|---|---|---|
| München | 18. Mai 2009 | Rakoczy, Tobias |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

             

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 08 17 1818

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-05-2009

| Im Recherchenbericht angeführtes Patentdokument | | Datum der Veröffentlichung | Mitglied(er) der Patentfamilie | | Datum der Veröffentlichung |
|---|---|---|---|---|---|
| WO 0028393 | A | 18-05-2000 | AU | 3291499 A | 29-05-2000 |
| | | | DE | 19982989 T0 | 28-03-2002 |
| | | | JP | 2002529843 T | 10-09-2002 |
| WO 9104521 | A | 04-04-1991 | EP | 0491711 A1 | 01-07-1992 |
| | | | FI | 83175 B | 28-02-1991 |
| | | | JP | 5505893 T | 26-08-1993 |
| WO 2006134036 | A | 21-12-2006 | CN | 101194212 A | 04-06-2008 |
| | | | DE | 102005027437 A1 | 28-12-2006 |
| | | | JP | 2008546545 T | 25-12-2008 |
| | | | US | 2009088891 A1 | 02-04-2009 |

EPO FORM P0461

Für nähere Einzelheiten zu diesem Anhang : siehe Amtsblatt des Europäischen Patentamts, Nr.12/82